(19) Europäisches Patentamt
European Patent Office
Office européen des brevets

(11) **EP 3 139 341 A1**

(12) **EUROPEAN PATENT APPLICATION**

(43) Date of publication:
**08.03.2017 Bulletin 2017/10**

(51) Int Cl.:
***G06T 5/00*** (2006.01)

(21) Application number: **15306347.4**

(22) Date of filing: **02.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **POULI, Tania**
**35576 Cesson-Sévigné (FR)**
• **REINHARD, Erik**
**35576 Cesson-Sévigné (FR)**

• **HAWARY, Fatma**
**35576 Cesson-Sévigné (FR)**
• **KOVNATSKY, Artiom**
**35576 Cesson-Sévigné (FR)**
• **BOOTH, Alexandra**
**35576 Cesson-Sévigné (FR)**
• **TURKAN, Mehmet**
**35576 Cesson-Sévigné (FR)**
• **FRADET, Matthieu**
**35576 Cesson-Sévigné (FR)**
• **PEREZ, Patrick**
**35576 Cesson-Sévigné (FR)**

(74) Representative: **Huchet, Anne**
**TECHNICOLOR**
**1-5, rue Jeanne d'Arc**
**92130 Issy-les-Moulineaux (FR)**

(54) **METHODS, SYSTEMS AND APPARATUS FOR SPECULAR HIGHLIGHT RECONSTRUCTION**

(57)    An aspect of present principles is directed to methods, systems, apparatus, computer readable code, and/or signals for image processing. The methods may include receiving a standard dynamic range (SDR) image; determining specular highlight regions of the SDR image; determining a luminance image by performing luminance profile reconstruction based on the specular highlight regions; determining a texture image based on propagation of texture and chromatic information for the specular highlight regions; determining an output image based on a combination of the luminance image and the texture image; wherein the specular highlight regions are determined based on clipped regions of the SDR image and features of the image.

*FIG. 1*

**Description**

**TECHNICAL FIELD**

The present disclosure relates to image processing and image restoration. In particular, the present disclosure relates to reconstructing over-exposed or clipped specular regions in images.

**BACKGROUND**

Cameras typically have a smaller dynamic range than real world scenes. Bright image parts that exceed a camera's dynamic range will appear as over-exposed or clipped areas. A camera will assign the maximum possible value of a color channel to such over-exposed or clipped areas. However, color, texture, contrast and luminance information are lost in such areas.

Specular or shiny objects, such as cars or metal objects, have specular surfaces that tend to result in over-exposed or clipped image areas when imaged with a camera sensor. Specular surfaces tend to have highlights which need to be accurately (or at least plausibly) reproduced to convey the specular appearance.

Inpainting is the process of reconstructing image regions of missing image information, such as information of over-exposed or clipped regions. Inpainting typically analyzes information surrounding the missing information region and propagates or copies information from similar, surrounding regions to the missing information region. However, this is not successful when the region to be reconstructed is not similar to its surroundings. In particular, this is not successful for specular highlight regions because such regions have different properties than their surroundings.

Specular highlight regions have a peaked luminance profile which is not well-represented in neighboring image areas. Moreover, the luminance values of the over-exposed image regions exceed those of the remaining image, hence propagating or copying information from elsewhere in the image is not applicable.

The presence of over-exposed regions leads to a degraded visual appearance on conventional displays. However, this problem is exacerbated when imagery with over-exposed content is prepared for display on a high dynamic range (HDR) display. Standard dynamic range (SDR) content can generally be prepared for display on an HDR device with the aid of an inverse tone reproduction operator (also known as an inverse tone mapping operator, or iTMO for short). iTMOs expand a dynamic range non-linearly and bright image regions especially receive the largest expansion. As a consequence, featureless over-exposed regions may be emphasized and become even less visually attractive.

Pouli et al., 'Image Statistics in Visual Computing', A K Peters / CRC Press, 2013 provide an overview of statistical regularities found in natural images, and report that many RGB-like color spaces show strong correlations between color channels for natural images. This property can be leveraged for reconstruction of regions with one or two clipped channels. For example, Abebe et al., 'Color Clipping and Over-exposure Correction', Eurographics Symposium on Rendering (Experimental Ideas & Implementations track), 2015 describe a correction method, which relies on the correlation between RGB channels of color images to recover regions where one and two channels are clipped. A brightness reshaping method is used when all three channels are clipped. Abebe et al., 'Correction of Over-Exposure using Color Channel Correlations', IEEE GlobalSIP, 2014, describe a further method that leverages cross-channel correlations to reconstruct clipped regions.

Rempel et al., Ldr2hdr: on-the-fly reverse tone mapping of legacy video and photographs. In ACM Transactions on Graphics (TOG), August 2007, Vol. 26, No. 3, p. 39, describe an inverse tone mapping technique that includes reconstruction of over-exposed regions by applying Gaussian convolution to the mask that indicates over-exposed regions. The convolved mask is multiplied by an edge-stopping function that is applied to the same input mask, and the resulting profile is added to the inverse tone mapped image.

If no information is present, i.e. in over-exposed regions, some techniques propose to super-impose a simple Gaussian luminance profile to give shape to these regions. For example, Wang et al., High dynamic range image hallucination, In Proceedings of the 18th Eurographics conference on Rendering Techniques, June 2007 (pp. 321-326), discuss processing image luminance with a bilateral filter to produce a low frequency representation of luminance. A high frequency representation is obtained based on the residual between the image and the low frequency version. A circularly symmetric Gaussian profile is superimposed to create new luminance profiles to each clipped region. Wang requires a user to select a texture reference by marking the image with one or more strokes. The texture is propagated into the clipped area via a texture synthesis process. The new luminance profile, the texture and the original image are blended through Poisson editing to smooth transitions.

Guo et al., Correcting over-exposure in photographs, In Computer Vision and Pattern Recognition (CVPR), 2010 IEEE Conference, June 2010, (pp. 515-521) recreate a luminance profile through an optimization process that takes into account the likelihood of over-exposure of each pixel.

Hou et al., Recovering Over-/Underexposed Regions in Photographs, 2013, SIAM J. Imaging Sciences, 6(4), 2213-2235 discusses separating an image into lightness and chrominance information by operating in the CIE Lab color space. They propose to use inpainting lightness values by smoothing and attenuating wavelet coefficients. The lightness profile created may be compressed through tone mapping. The chromatic channels are inpainted using a similar procedure where wavelet coefficients are smoothed. An additional adjustment/normalization takes into account the lightness adjustments.

Rouf et al., Gradient domain color restoration of clipped highlights, June 2012, In Computer Vision and Pattern Recognition Workshops (CVPRW), 2012 IEEE Computer Society Conference on (pp. 7-14). IEEE, focus on hue restoration in clipped areas. For over-exposed regions, gradient values at the boundary are smoothed to avoid boundary artefacts, and to reconstruct a Gaussian profile.

Elboher et al., Recovering color and details of clipped image regions, June 2012, Proc. CGVCVIP, discuss a color correction method for clipped image regions based on color lines, i.e. linear structures identified in 3D plots of pixel values.

## SUMMARY OF PRESENT PRINCIPLES

There is a need to improve image reconstruction techniques by restoring the appearance of clipped specular highlight regions. Present techniques fail to classify or categorize specular highlights clipped regions and to specifically address such specular regions. Moreover, previous techniques solely rely on inpainting and fail to take into the account a shape of a specular region.

Moreover, present techniques and iTMOs emphasize featureless over-exposed regions. An aspect of present principles is directed to ameliorating such problem by reconstructing the over-exposed regions.

An aspect of present principles is directed to methods, apparatus and systems for reconstructing representations of specular highlights in images. In particular, the present principles are directed to detection and correction of clipped image regions caused by a camera's inability to fully capture the dynamic range of scenes depicting strong reflections off specular surfaces.

An aspect of present principles is directed to methods, systems, apparatus, computer readable code, and/or signals for image processing. The methods may include receiving a standard dynamic range (SDR) image; determining specular highlight regions of the SDR image; determining a luminance image by performing luminance profile reconstruction based on the specular highlight regions; determining a texture image based on propagation of texture and chromatic information for the specular highlight regions; determining an output image based on a combination of the luminance image and the texture image; wherein the specular highlight regions are determined based on clipped regions of the SDR image and features of the image. The apparatus or systems may include a receiver for receiving a standard dynamic range (SDR) image; a processor configured to determine specular highlight regions of the SDR image, the processor further configured to determine a luminance image by performing luminance profile reconstruction based on the specular highlight regions and to determine a texture image based on propagation of texture and chromatic information for the specular highlight regions; wherein the processor further determines an output image based on a combination of the luminance image and the texture image, and wherein the specular highlight regions are determined based on clipped regions of the SDR image and features of the image.

The specular highlight regions may be determined by selecting a class with a highest probability from two or more classes for each clipped region, wherein each class is determined based features relating to the respective clipped region.

The luminance profile reconstruction may be determined based on the shape of each of the specular highlight regions. The peak of each of the specular highlight regions may follow the respective shape of the specular highlight regions.

The clipped regions may be determined based on a threshold value. There may be a further determination of a base layer $I_{base}$ that contains the large scale variations in luminance of the image and a second layer by $I_{detail}$, that contains smaller details.

The luminance profile image may be determined based on the base layer and the texture propagation image is determined based on the second layer.

The output image may be determined based on a combination represented as

$$I_{out(p)} = \begin{cases} I(p) & if\ M_{clip}(p) = 0 \\ I_{lum}(p)I_{tex}(p) & if\ M_{clip}(p) = 1 \end{cases}$$

The output image may be determined based on a combination represented as

$$I_{out} = \alpha\, I_{lum} + \beta\, I_{tex}$$

The output image may be determined based on a combination represented as

$$I_{out,r} = \frac{L_{lum}}{L_{tex}} I_{tex,r}$$

The image processing may be part of at least one of a post-production, capture, or processing for display.

The features may be determined based on at least one selected from the group of: (i) a size of the clipped region; (ii) a percentage of the size of the clipped region and a size of the SDR image; (iii) a position of the clipped region in the image; (iv) a ratio between a major axis and a minor axis of clipped region.

The features may be determined based on a segment that maximally overlaps the clipped region. The features may be determined based on at least one selected from the group of: (a) color distribution of the segment in a color space based on at least a mean, standard deviation, skew and kurtosis; (b) gradient distribution of the segment based on at least a mean, standard deviation, skew and kurtosis; (c) luminance distribution of the segment based on at least a mean, standard deviation, skew and/or kurtosis; (d) texture descriptors of the segment based on Histogram of Oriented Gradients.

**BRIEF SUMMARY OF THE DRAWINGS**

The features and advantages of the present invention may be apparent from the detailed description below when taken in conjunction with the Figures described below:

Figure 1 is a diagram depicting an exemplary method in accordance with present principles.
Figure 2 is a diagram depicting an exemplary method in accordance with present principles.
Figure 3 illustrates an example of a reconstructed luminance profile.
Figure 4 is a diagram depicting an exemplary method for multi-layer specular highlight reconstruction in accordance with present principles.
Figure 5 is a diagram depicting an exemplary apparatus in accordance with present principles.
Figure 6A is an illustration of clipped pixel classification.
Figure 6B is an illustration of classification of connected regions of clipped pixels.

**DETAILED DESCRIPTION**

The present principles are directed to methods, apparatus and systems for reconstructing clipped, specular highlights in images.

Clipped or over-exposed image regions are typically those where one, two or three color channels have reached the maximum representable pixel value. An aspect of present principles is directed to reconstructing image regions where all three color channels have reached the maximum representable pixel value as a result of specular scene content. However, image regions where only one or two channels have maximum pixel values that may be corrected with additional techniques (e.g., an additional a preprocessing step).

The reconstruction is based on detection and correction of clipped image regions depicting light reflected off specular surfaces ("specular highlight regions"). A "region" may be defined as a plurality of pixels that are grouped together. Pixels are grouped together if each pixel of the group is connected to at least one other pixel of the group. An image may have multiple such regions.

An aspect of present principles is directed to detecting depictions of specular highlight regions in an image. These specular highlight regions may be reconstructed to provide a more accurate appearance of specular objects, materials and/or image regions.

An aspect of present principles is directed to reconstructing a luminance profile for each specular highlight region based on the shape of the specular highlight region. An aspect of present principles is directed to reconstructing specular highlight regions based on one or more of the following:

- Determining clipped regions (representing over-exposed areas) in an image *I*.
- Determining which clipped regions are specular highlight regions.
- For each specular highlight region, determining a reconstructed luminance profile based on the shape of the highlight region.
- Determining a luminance image $I_{lum}$ based on all the reconstructed luminance profiles and the input image $I$.
- For each specular highlight region, determining texture and chromatic information by propagating information from areas adjacent to the region.
- Determining a texture image $I_{tex}$ based on the propagated texture and chromatic information and the input image.
- Generating a reconstructed output image $I_{out}$ based on a combination of the luminance image $I_{lum}$ and the texture image $I_{tex}$.

An aspect of present principles is directed to restoring specular highlight regions in an image processing pipeline. In one example, an aspect of present principles is directed to reconstructing over-exposed or clipped specular highlight regions in an image displayed by a device (e.g., set-top box, computer, tablet, smartphone, laptop or any other device capable of providing information for display). In one example, SDR image content is converted to HDR for processing and/or display by an HDR display device. In another example, specular highlight regions of an image can be reconstructed during a capture process. For example, during image capture (e.g., by a camera, smartphone), the image can be enhanced in accordance with present principles. In another example, an aspect of present principles is directed to reconstructing clipped specular highlight regions during post-production.

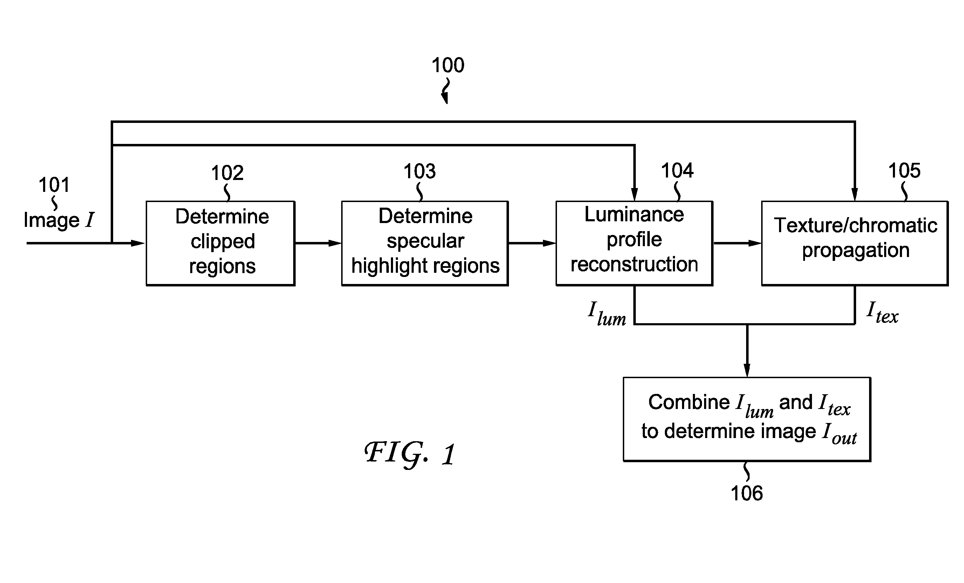

The examples described above may be implemented within the figures described below. Fig. 1 is a diagram depicting an exemplary method 100 for specular highlight region reconstruction in accordance with present principles. Method 100 may be performed in any image processing pipeline. For example, method 100 may be performed in a device processing content for a display, a capture system, and/or a post-production production system.

Method 100 may commence upon receipt of an image $I$ 101. The image $I$ 101 may be any type of image. In one example, the image $I$ 101 may be an SDR image in an RGB color space (e.g., a MxNx3 image). The individual color channels of the image $I$ 101 may be denoted by $I_r$, $I_g$ and $I_b$ for the red, green and blue channels respectively. The image $I$ 101 may be an individual image or it may be part of a video sequence of images. The image $I$ 101 may be a decoded raw image format.

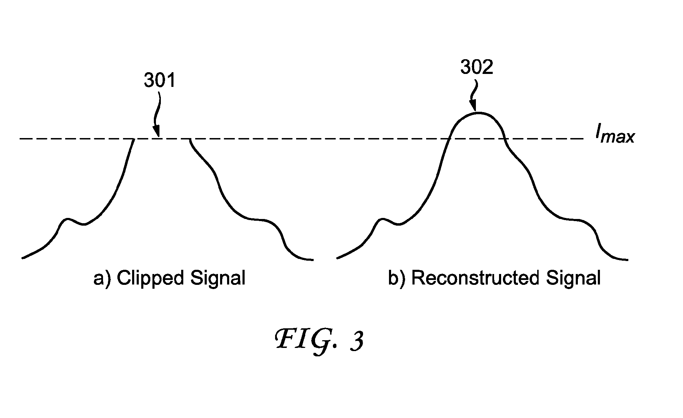

The method 100 may be practiced by an apparatus that includes a block 102 for determining clipped regions of the image $I$ 101. Block 102 may detect the clipped regions of the image $I$ 101. In one example, block 102 may determine clipped regions based on a threshold value $\tau_{clip}$. In one example, the threshold $\tau_{clip}$ can be set to the maximum representable (integer) value of an image, such as $I_{max}$ in Figure 3. This may be 255 for an 8-bit image. Alternatively, a lower value, e.g., 235, can be chosen to account for image noise. Setting the threshold $\tau_{clip}$ to any value lower than the maximum representable pixel value may allow the selection of larger over-exposed regions. Selecting somewhat larger regions may improve robustness, sensitivity to noise, and/or sensitivity to prior processing. One reason for this is that pixels located very close to over-exposed regions may depict glare and are therefore representing the scene structure less well. By incorporating these pixels into the over-exposed region, they may receive a luminance correction and this may improve their visual appearance. In one example, block 102 may compare the value of each pixel to the threshold value $\tau_{clip}$. If the pixel value is above the threshold value $\tau_{clip}$, than block 102 may identify that pixel as a clipped pixel. Block 102 may determine clipped region groups of connected pixels.

Block 102 may determine a mask $M_{clip}$ that indicates clipped pixels. In one example, the mask $M_{clip}$ may be determined as follows:

$$\text{Equation No. (1)} \qquad M_{clip}(i) = \begin{cases} 1 & \text{if } I_r(i) > \tau_{clip} \wedge I_g(i) > \tau_{clip} \wedge I_b(i) > \tau_{clip} \\ 0 & \text{otherwise} \end{cases}$$

The value(s) for mask $M_{clip}$ may be determined for each pixel i of a clipped region. The mask $M_{clip}$ may also be applied to each color channel of an image. Block 102 may determine which image pixels are clipped based on the mask $M_{clip}$ may. Clipped regions may then be determined based on connected pixels identified as clipped by mask $M_{clip}$.

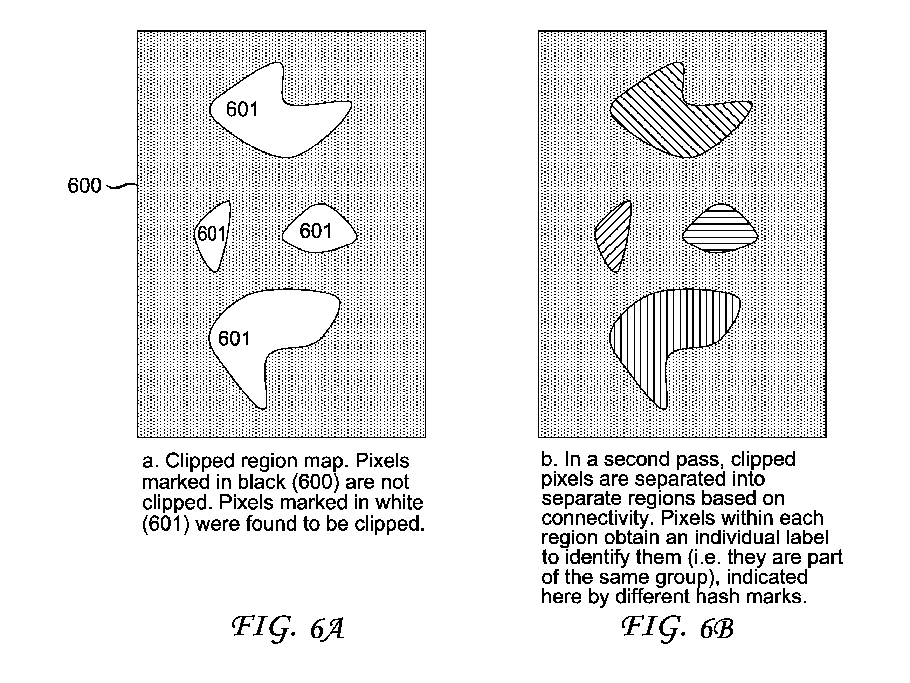

In one example, block 102 may determine clipped regions in two steps. First, block 102 may determine which pixels are clipped (e.g., based on a mask $M_{clip}$). Second, block 102 may determine a clipped region based on pixel connectivities. Block 201 may determine regions by determining the connected groups of pixels, as shown in Figs. 6A and 6B. Block 102 may determine clipped pixels as shown in Fig. 6A. As shown in Fig. 6A, pixels marked in black (600) are not clipped. Pixels marked in white (601) were found to be clipped. Block 102 may then determine regions for the clipped pixels as shown in Fig. 6B. As shown in Fig. 6B, in a second pass, clipped pixels are separated into separate regions based on connectivity. Pixels within each region obtain an individual label to identify them (i.e. they are part of the same group), indicated here by different hash marks in Fig. 6B.

Block 102 may pass control to block 103.

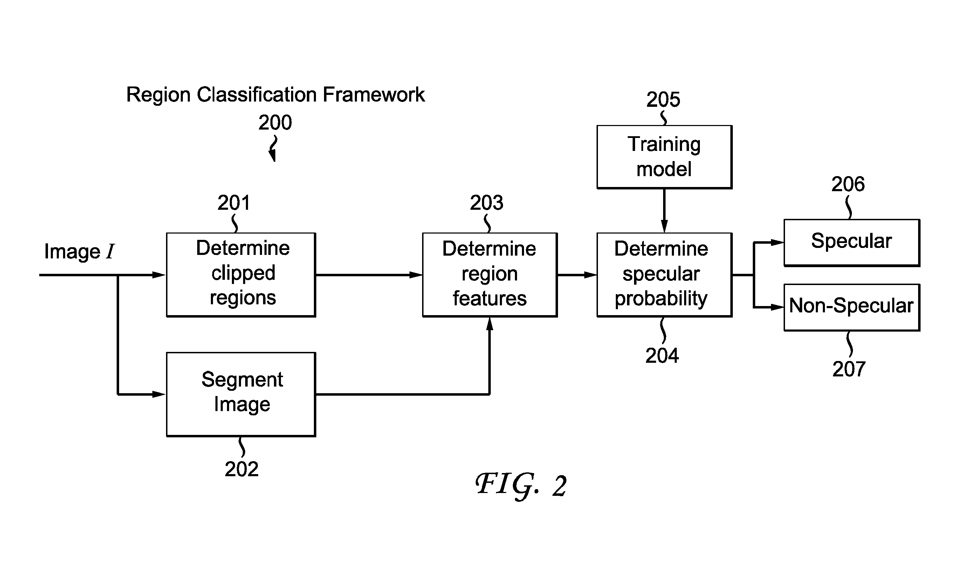

Block 103 may determine specular highlight regions based on the clipped regions from 102. In one example, block 103 may determine specular highlight regions by classifying the clipped regions. Block 103 may determine, for each clipped region, whether the region represents a specular highlight region. Block 103 may determine whether the clipped region represents a specular highlight based on the shape of the clipped region and properties of the parts surrounding the clipped region. Block 103 may determine whether the clipped region represents a specular highlight in accordance with the principles described in connection with method 200 of Fig. 2. Block 103 may pass control to block 104.

Block 104 may perform luminance profile reconstruction for the specular highlight regions of the image *I* 101. Block 104 may determine a luminance profile for each specular highlight region determined by block 103. Block 104 may determine the luminance profile by simulating the appearance of that specular highlight region's original real world scene.

In one example, block 104 may determine a luminance profile that allows the specular highlights to follow the shape of the object of the region. Block 104 may determine a luminance profile for each specular highlight region based on the outline of the real world object of the specular highlight region. In addition, block 104 may perform luminance profile reconstruction using information from pixels surrounding the specular highlight region.

Fig. 3 illustrates an example of a clipped and a reconstructed luminance profile. As shown in Fig. 3, clipped area 301 is flat and featureless, since a camera sensor is saturated for those pixels. Additionally, the luminance value of the pixels of clipped area 301 is (close to) the maximum value that can be encoded within a single image, denoted as $I_{max}$ (e.g. 255 for an 8-bit image). However, as shown by element 302 of Fig. 3, the reconstructed luminance profile can significantly exceed $I_{max}$ of clipped area 301.

Block 104 may determine a luminance image $I_{lum}$ based on the image *I* 101 and the luminance profile reconstruction(s) for each of the specular highlight regions. Block 104 may determine the luminance image $I_{lum}$ by combining the luminance profile reconstructed regions (corresponding with the specular highlight regions) with the non-specular highlight regions from the original image *I* 101. Block 104 may provide the luminance image $I_{lum}$ to block 106.

Block 105 may propagate color and texture information into a specular highlight region from the areas that surround the specular highlight region. In one example, block 105 may propagate texture and chromatic information based on inpainting or texture synthesis. For example, block 105 may perform inpainting based on the image *I* 101 and the mask $M_{clip}$ from block 102. In one example, block 105 may determine a texture image $I_{tex}$. The texture image $I_{tex}$ may be determined by propagating texture and chromatic information for each of the specular highlight regions. In one example, block 105 may determine the texture image $I_{tex}$ by combining the propagated t specular highlight regions with non-specular highlight regions from the original image *I* 101.

Block 106 may combine the luminance image $I_{lum}$ from block 104 and the texture image $I_{tex}$ from block 105. Block 106 may determine a single image $I_{out}$ based on the combination of the luminance image $I_{lum}$ and the texture image $I_{tex}$. The resulting image $I_{out}$ is an HDR image.

In one example, block 106 may determine the resulting image $I_{out}$ as follows:

$$\text{Equation No. (2)} \qquad I_{out} = \alpha\, I_{lum} + \beta\, I_{tex}$$

Equation No. (2) includes parameters $\alpha$ and $\beta$, where parameter $\alpha \in [0,1]$ and where parameters $\alpha$ and $\beta$ determine the relative proportions of $I_{lum}$ and $I_{tex}$. In one example, the values of parameters $\alpha$ and $\beta$ may each be set to 0.5. In another example, $\alpha$ and $\beta$ may be related as follows:

$$\text{Equation No. (3)} \quad \alpha + \beta = 1$$

Additionally, the values of parameters $\alpha$ and $\beta$ may be different for different pixels.

In another example, the resulting image $I_{out}$ may be determined based on the luminance channels of $I_{lum}$ and $I_{tex}$ and the color channels of $I_{tex}$ as follows (illustrated with an exemplary red color channel):

$$\text{Equation No. (4)} \quad I_{out,r} = \frac{L_{lum}}{L_{tex}} I_{tex,r}$$

Fig. 2 illustrates an exemplary method 200 for determining specular highlight regions. In one example, the method 200 may include be practiced on a apparatus that includes a block 201 that may determine clipped regions of an image *I*. In one example, block 201 may determine clipped regions in accordance with principles described in connection with block 102 of Fig. 1.

The apparatus practicing the method 200 may further include a block 202 for segmenting an input image. Block 202 may determine a segmented image $I_{seg}$. In one example, block 202 may segment the image based on any segmentation method (e.g. a mean-shift algorithm).

Block 203 may determine features for each clipped region. Block 203 may determine region features based on the clipped regions from block 201 and the segmented image from block 202.

For each clipped region, block 203 may determine one or more of the following clipped region features: (i) region size; (ii) percentage of region size relative to image size; (iii) region position in the image; (iv) ratio between major and minor axis of region.

Block 203 may further determine and/or select a segment from the segmented image $I_{seg}$ which maximally overlaps the clipped region. For that clipped region, block 203 may determine one or more of the following features relative to the selected segment: (a) color distribution, mean, standard deviation, skew and/or kurtosis in RGB, Lab or any other color space; (b) gradient distribution, mean, standard deviation, skew and/or kurtosis; (c) luminance distribution, mean, standard deviation, skew and/or kurtosis; (d) texture descriptors such as Histogram of Oriented Gradients. Block 203 may pass control to block 204.

Block 204 may determine, for each region, the probability that region is a specular highlight region. Block 204 may determine class probabilities for each clipped region. For each clipped region, block 204 may determine probabilities for one or more classes based on the features of the respective region. In one example, the classes may include light sources, diffuse surfaces, and specular highlight surfaces. In one example, block 204 may assign the probability that a clipped region (or the object represented by the clipped region) belongs in a class.

Block 204 may determine a class probability that indicates a first probability that the clipped region represents a specular highlight surface. Block 204 may then determine a second probability that the clipped region represents a different class. Block 204 may further determine additional probabilities that the clipped region represents different class(es). Block 204 may select the class with the highest probability for the clipped region being evaluated. If the class with the highest probability is the specular highlights class, than that region is determined to be a specular highlight region and control may be passed to block 206. Block 206 may then identify that region as a specular highlight region. Otherwise, if the class with the highest probability is not the specular highlights class, than that region is determined to be a non-specular region and control may be passed to block 207. Block 207 may then identify that region as a non-specular highlight region.

Block 204 may determine class probabilities based on the region features from block 203. In one example, block 204 may compare the features from block 203 to a training model 205. The training model 205 may be determined based on the features from the respective clipped regions. The training model 205 may be determined based on the features of the clipped regions of different classes. The training model 205 may be determined based on machine learning utilized to cluster particular features into the classes that being evaluated.

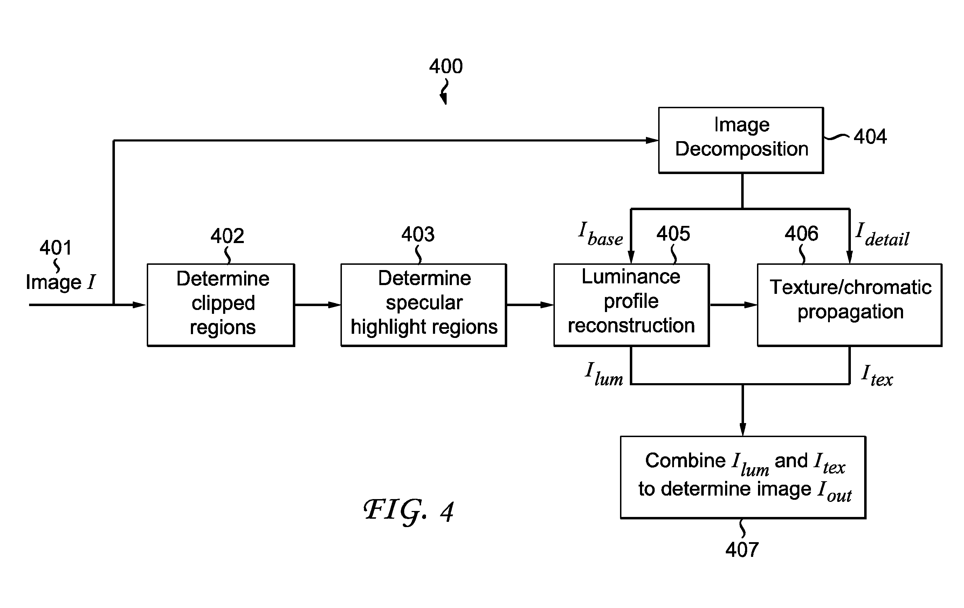

Fig. 4 is a diagram depicting an exemplary method 400 for multi-layer specular highlight region reconstruction in accordance with present principles. Method 400 may be performed in any image processing pipeline. For example, method 400 may be performed in a device processing content for a display, a capture system, and/or a post-production production system. Method 400 is similar to method 100 of Fig. 1. The variant of method 400 further includes separating the image $I$ 401 into two or more layers prior to processing.

Method 400 may receive an image $I$ 401. Method 400 may receive the image $I$ 401 in accordance with the principles described in connection with image $I$ 101 of Fig. 1. The apparatus practicing the method 400 may include a block 402 that may determine clipped regions of the image $I$ 401. Block 402 may determine clipped regions in accordance with the principles described in connection with block 102 of Fig. 1.

Block 403 may determine specular highlight regions of the clipped regions from block 402. Block 403 may determine specular highlight regions in accordance with the principles described in connection with block 102 of Fig. 1 or the method 200 of Fig. 2.

In one example, the image $I$ 401 may be separated into multiple layers by the image decomposition block 404. In one example, block 404 may decompose the image $I$ 401 into two layers. A first layer of the image $I$ 401 may be denoted by $I_{base}$. Block 404 may determine the first image layer $I_{base}$ based on large scale variations in luminance of the image $I$ 401. In one example, block 404 may determine the first image layer $I_{base}$ based on a low pass filter or a bilateral filter. Block 404 may further determine a second image layer $I_{detail}$ based on smaller details of the image $I$ 401. In one example, block 404 may determine the second image layer $I_{detail}$ based on a high pass filter or the residual between the image $I$ 401 and the first image layer $I_{base}$. For example, block 404 may determine the second image layer $I_{detail}$ as follows:

$$\text{Equation No. (5)} \qquad I_{detail} = I/I_{base}$$

Block 404 may then pass the layers to blocks 405 and 406.

Block 405 may take into account the base layer in performing luminance reconstruction. Blocks 405 and 406 may be applied to different layers rather than on the image itself.

In one example, block 405 may determine luminance profile reconstruction based on the first image layer $I_{base}$. In one example, block 405 may determine luminance profile reconstruction in accordance with the principles described in connection with block 104 of Fig. 1.

In one example, block 406 may propagate texture and chromatic information based on the second layer $I_{detail}$. In one example, block 406 may propagate texture and chromatic information based on a detail in accordance with the principles described in connection with block 105 of Fig. 1.

In one example, block 407 may combine the luminance and texture images in accordance with the principles described in connection with block 106 of Fig. 1. In another example, the resulting image $I_{out}$ may be determined based on unclipped pixels taken directly from the image $I$ while clipped pixels are replaced with a recombination of $I_{lum}$ and $I_{tex}$:

$$\text{Equation No. (6)} \quad I_{out(p)} = \begin{cases} I(p) & \text{if } M_{clip}(p) = 0 \\ I_{lum}(p) I_{tex}(p) & \text{if } M_{clip}(p) = 1 \end{cases}$$

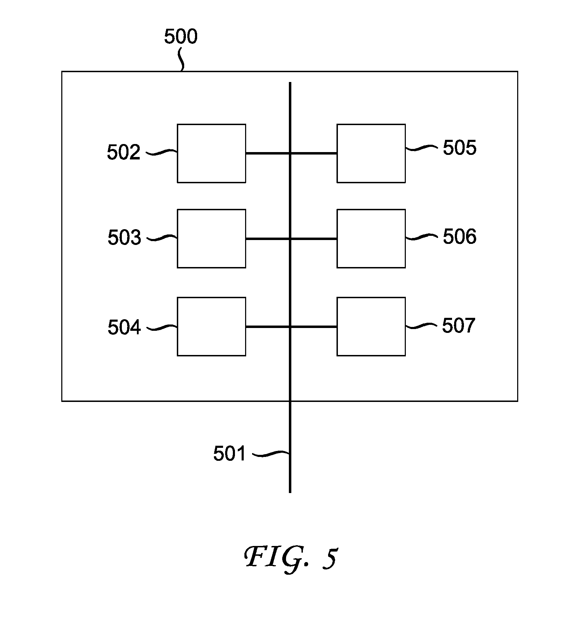

Fig. 5 represents an exemplary architecture of an apparatus 500 which may be configured to implement methods described in relation with Fig. 1-4 and Equation Nos. 1-6.

Apparatus 500 comprises following elements that are linked together by a data and address bus 501:

- a microprocessor 502 (or CPU), which is, for example, a DSP (or Digital Signal Processor);
- a ROM (or Read Only Memory) 503;
- a RAM (or Random Access Memory) 504;
- an I/O interface 505 for reception of data to transmit, from an application; and
- a battery 506 (or other suitable power source).

According to a variant, the battery 506 is external to the apparatus. In each of mentioned memory, the word « register » used in the specification can correspond to area of small capacity (some bits) or to very large area (e.g. a whole program or large amount of received or decoded data). ROM 503 comprises at least a program and parameters. Algorithm of the methods according to the invention is stored in the ROM 503. When switched on, the CPU 502 uploads the program in the RAM and executes the corresponding instructions.

RAM 504 comprises, in a register, the program executed by the CPU 502 and uploaded after switch on of the apparatus 500, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or an apparatus), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a specific example of image processing, the image or picture I is obtained from a source. For example, the source belongs to a set comprising:

- a local memory (503 or 504), e.g. a video memory or a RAM (or Random Access Memory), a flash memory, a ROM (or Read Only Memory), a hard disk ;
- a storage interface (505), e.g. an interface with a mass storage, a RAM, a flash memory, a ROM, an optical disc or a magnetic support;
- a communication interface (505), e.g. a wireline interface (for example a bus interface, a wide area network interface, a local area network interface) or a wireless interface (such as a IEEE 802.11 interface or a Bluetooth® interface); and
- an image capturing circuit (e.g. a sensor such as, for example, a CCD (or Charge-Coupled Device) or CMOS (or Complementary Metal-Oxide-Semiconductor)).

According to different embodiments, the decoded image $\hat{I}$ is sent to a destination; specifically, the destination belongs to a set comprising:

- a local memory (503 or 504), e.g. a video memory or a RAM, a flash memory, a hard disk;
- a storage interface (505), e.g. an interface with a mass storage, a RAM, a flash memory, a ROM, an optical disc or a magnetic support;
- a communication interface (505), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, Wi-Fi ® or a Bluetooth ® interface); and
- a display.

According to different examples, the bitstream BF and/or F are sent to a destination. As an example, one of bitstream F and BF or both bitstreams F and BF are stored in a local or remote memory, e.g. a video memory (504) or a RAM (504), a hard disk (503). In a variant, one or both bitstreams are sent to a storage interface (505), e.g. an interface with a mass storage, a flash memory, ROM, an optical disc or a magnetic support and/or transmitted over a communication interface (505), e.g. an interface to a point to point link, a communication bus, a point to multipoint link or a broadcast network.

According to different examples, the bitstream BF and/or F is obtained from a source. Exemplarily, the bitstream is read from a local memory, e.g. a video memory (504), a RAM (504), a ROM (503), a flash memory (503) or a hard disk (503). In a variant, the bitstream is received from a storage interface (505), e.g. an interface with a mass storage, a RAM, a ROM, a flash memory, an optical disc or a magnetic support and/or received from a communication interface (505), e.g. an interface to a point to point link, a bus, a point to multipoint link or a broadcast network.

According to different examples, apparatus 500 being configured to implement methods in accordance with present principles, belongs to a set comprising:

- a mobile device ;
- a communication device ;
- a game device ;
- a tablet (or tablet computer) ;
- a laptop ;
- a still image camera;
- a video camera ;
- an encoding chip;
- a still image server ; and
- a video server (e.g. a broadcast server, a video-on-demand server or a web server).

According to different examples, apparatus 500 being configured to implement an image processing process in accordance with present principles, belongs to a set comprising:

- a mobile device ;
- a communication device ;
- a game device ;
- a set top box;
- a TV set;
- a tablet (or tablet computer) ;
- a laptop ;
- a display and
- a decoding chip.

Implementations of the various processes and features described herein may be embodied in a variety of different equipment or applications. Examples of such equipment include an encoder, a decoder, a post-processor processing output from a decoder, a preprocessor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described example, or to carry as data the actual syntax-values written by a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

Numerous specific details have been set forth herein to provide a thorough understanding of the present invention. It will be understood by those skilled in the art, however, that the examples above may be practiced without these specific details. In other instances, well-known operations, components and circuits have not been described in detail so as not to obscure the present invention. It can be appreciated that the specific structural and functional details disclosed herein may be representative and do not necessarily limit the scope of the present invention.

Various examples of the present invention may be implemented using hardware elements, software elements, or a combination of both. Some examples may be implemented, for example, using a computer-readable medium or article which may store an instruction or a set of instructions that, if executed by a machine, may cause the machine to perform a method and/or operations in accordance with the examples. Such a machine may include, for example, any suitable processing platform, computing platform, computing device, processing device, computing system, processing system, computer, processor, or the like, and may be implemented using any suitable combination of hardware and/or software. The computer-readable medium or article may include, for example, any suitable type of memory unit, memory device, memory article, memory medium, storage device, storage article, storage medium and/or storage unit. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus and constituents included therein, for example, a processor, an encoder and a decoder, may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

**Claims**

1. An image processing method comprising:

   receiving a standard dynamic range (SDR) image;
   determining specular highlight regions of the SDR image;
   determining a luminance image by performing luminance profile reconstruction based on the specular highlight regions;
   determining a texture image based on propagation of texture and chromatic information for the specular highlight regions;
   determining an output image based on a combination of the luminance image and the texture image;
   wherein the specular highlight regions are determined based on clipped regions of the SDR image and features of the image.

2. An apparatus for image processing, the apparatus comprising
   a receiver for receiving a standard dynamic range (SDR) image;
   a processor configured to determine specular highlight regions of the SDR image, the processor further configured to determine a luminance image by performing luminance profile reconstruction based on the specular highlight regions and to determine a texture image based on propagation of texture and chromatic information for the specular highlight regions;
   wherein the processor further determines an output image based on a combination of the luminance image and the texture image, and
   wherein the specular highlight regions are determined based on clipped regions of the SDR image and features of the image.

3. The method of claim 1 or apparatus of claim 2, wherein the specular highlight regions are determined by selecting a class with a highest probability from two or more classes for each clipped region, wherein each class is determined based features relating to the respective clipped region.

4. The method of claim 1 or apparatus of claim 2, wherein the luminance profile reconstruction is determined based on the shape of each of the specular highlight regions.

5. The method or apparatus of claim 4, wherein the peak of each of the specular highlight regions follows the respective shape of the specular highlight regions.

6. The method of claim 1 or apparatus of claim 2, wherein the clipped regions are determined based on a threshold value.

7. The method of claim 1 or apparatus of claim 2, further comprising determining a base layer $I_{base}$ that contains the large scale variations in luminance of the image and a second layer by $I_{detail}$, that contains smaller details.

8. The method of or apparatus of claim 7, wherein the luminance profile image is determined based on the base layer and the texture propagation image is determined based on the second layer.

9. The method of claim 1 or apparatus of claim 2, wherein the output image is determined based on a combination represented as

$$I_{out(p)} = \begin{cases} I(p) & if\ M_{clip}(p) = 0 \\ I_{lum}(p)I_{tex}(p) & if\ M_{clip}(p) = 1 \end{cases}$$

10. The method of claim 1 or apparatus of claim 2, wherein the output image is determined based on a combination represented as

$$I_{out} = \alpha\, I_{lum} + \beta\, I_{tex}$$

**11.** The method of claim 1 or apparatus of claim 2, wherein the output image is determined based on a combination represented as

$$I_{out,r} = \frac{L_{lum}}{L_{tex}} I_{tex,r}$$

**12.** The method of claim 1 or apparatus of claim 2, wherein the image processing is part of at least one of a post-production, capture, or processing for display.

**13.** The method of claim 1 or apparatus of claim 2, wherein the features are determined based on at least one selected from the group of: (i) a size of the clipped region; (ii) a percentage of the size of the clipped region and a size of the SDR image; (iii) a position of the clipped region in the image; (iv) a ratio between a major axis and a minor axis of clipped region.

**14.** The method of claim 1 or apparatus of claim 2, wherein the features are determined based on a segment that maximally overlaps the clipped region.

**15.** The method or apparatus of claim 14, wherein the features are determined based on at least one selected from the group of: (a) color distribution of the segment in a color space based on at least a mean, standard deviation, skew and kurtosis; (b) gradient distribution of the segment based on at least a mean, standard deviation, skew and kurtosis; (c) luminance distribution of the segment based on at least a mean, standard deviation, skew and/or kurtosis; (d) texture descriptors of the segment based on Histogram of Oriented Gradients.

*FIG. 1*

Region Classification Framework
200

FIG. 2

a) Clipped Signal          b) Reconstructed Signal

*FIG. 3*

*FIG. 4*

FIG. 5

600 ⟶

a. Clipped region map. Pixels marked in black (600) are not clipped. Pixels marked in white (601) were found to be clipped.

*FIG. 6A*

b. In a second pass, clipped pixels are separated into separate regions based on connectivity. Pixels within each region obtain an individual label to identify them (i.e. they are part of the same group), indicated here by different hash marks.

*FIG. 6B*

Europäisches
Patentamt

European
Patent Office

Office européen
des brevets

# EUROPEAN SEARCH REPORT

Application Number

EP 15 30 6347

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Xiong Xi: "Inpainting for over-exposed photographs", Thesis submitted for the degree of Master of Science in the Department of Mathematics, National University of Singapore, 31 December 2011 (2011-12-31), XP055250020, Retrieved from the Internet: URL:http://www.scholarbank.nus.edu.sg/bitstream/handle/10635/30246/thesis.pdf?sequence=1 [retrieved on 2016-02-15] | 1-3,6, 9-12,14, 15 | INV. G06T5/00 |
| Y | * section 1.1 The problem section 1.2 Method section 3.1 General section 3.2 Detection section 3.3 Lightness correction section 3.4 Color correction section 3.4.1 Small holes section 3.4.2 Large regions Chapter 5; figures 1.4, 3.1,4.1-4.7 * ----- | 4,5,7,8, 13 | |
| Y | LVDI WANG ET AL: "High Dynamic Range Image Hallucination", EUROGRAPHICS SYMPOSIUM ON RENDERING, XX, XX, 3 September 2007 (2007-09-03), pages 1-7, XP002581501, * figure 2 * ----- | 4,5 | |

TECHNICAL FIELDS SEARCHED (IPC)

G06T

-/--

The present search report has been drawn up for all claims

| Place of search | Date of completion of the search | Examiner |
|---|---|---|
| Munich | 18 February 2016 | Tillier, Christophe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 15 30 6347

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Likun Hou ET AL: "RECOVERING OVER/UNDER-EXPOSED REGIONS IN PHOTOGRAPHS", SIAM Journal on Imaging Sciences, 1 January 2013 (2013-01-01), pages 2213-2235, XP055251536, DOI: 10.1137/120888302 Retrieved from the Internet: URL:http://www.math.nus.edu.sg/~matzuows/HJS.pdf [retrieved on 2016-02-18] * the whole document * | 7,8 | |
| Y | ELBOHER ET AL: "Recovering Color and Details of Clipped Image Regions", IADIS INTERNATIONAL CONFERENCE ON COMPUTER GRAPHICS, VISUALIZATION, COMPUTER VISION AND IMAGE PROCESSING (CGVCVIP),, 1 July 2010 (2010-07-01), pages 124-132, XP007917593, * section 3.1 Indentifying color clippuing * | 13 | TECHNICAL FIELDS SEARCHED (IPC) |

The present search report has been drawn up for all claims

| Place of search | Date of completion of the search | Examiner |
|---|---|---|
| Munich | 18 February 2016 | Tillier, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **POULI ; A K PETERS et al.** Image Statistics in Visual Computing. CRC Press, 2013
- **REMPEL et al.** Ldr2hdr: on-the-fly reverse tone mapping of legacy video and photographs. *ACM Transactions on Graphics (TOG),* August 2007, vol. 26 (3), 39
- **WANG et al.** High dynamic range image hallucination. *Proceedings of the 18th Eurographics conference on Rendering Techniques,* June 2007, 321-326
- **GUO et al.** Correcting over-exposure in photographs. *Computer Vision and Pattern Recognition (CVPR), 2010 IEEE Conference,* June 2010, 515-521
- **HOU et al.** Recovering Over-/Underexposed Regions in Photographs. *SIAM J. Imaging Sciences,* 2013, vol. 6 (4), 2213-2235
- **ROUF et al.** Gradient domain color restoration of clipped highlights. *Computer Vision and Pattern Recognition Workshops (CVPRW), 2012 IEEE Computer Society Conference,* June 2012, 7-14